(19) **Europäisches Patentamt**

**European Patent Office**

**Office européen des brevets**

(11) **EP 1 460 703 A1**

(12) **EUROPEAN PATENT APPLICATION**

(43) Date of publication:
**22.09.2004 Bulletin 2004/39**

(51) Int Cl.[7]: **H01M 8/02**, C08K 3/04,
C08K 7/22, C04B 35/00

(21) Application number: **04006396.8**

(22) Date of filing: **17.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **18.03.2003 JP 2003073660**

(71) Applicant: **NICHIAS CORPORATION Tokyo (JP)**

(72) Inventors:
• **Inagaki, Tsuyoshi, c/o Nichias Corp., Hamamatsu-shi, Shizuoka (JP)**
• **Omura, Atsushi, c/o Nichias Corp., Hamamatsu-shi, Shizuoka (JP)**
• **Shishitani, Hideyuki, c/o Nichias Corp., Hamamatsu-shi, Shizuoka (JP)**

(74) Representative: **Grünecker, Kinkeldey, Stockmair & Schwanhäusser Anwaltssozietät Maximilianstrasse 58 80538 München (DE)**

(54) **Conductive resin composition, fuel cell separator and method for producing fuel cell separator**

(57)     The present invention provides a conductive resin composition having good fluidity, excellent conductivity, and particularly suitable for the production of a fuel cell separator, and provides a fuel cell separator having excellent conductivity, high dimensional accuracy and excellent gas sealability at low cost, using the above-mentioned conductive resin material.

## FIG. 1

EP 1 460 703 A1

**Description**

FIELD OF THE INVENTION

The present invention relates to a conductive resin composition, and particularly to a conductive resin composition suitable as a material for a fuel cell separator. Further, the invention relates to a fuel cell separator and a method for producing the same.

BACKGROUND OF THE INVENTION

In recent years, demand for fuel cells in which chemical energy of fuel is converted to electric energy has been glowing. In general, a fuel cell is in the form that a number of unit cells are stacked, each of which comprises an electrolyte-containing matrix, electrode plates having the electrolyte-containing matrix therebetween, and separators arranged on the outsides thereof.

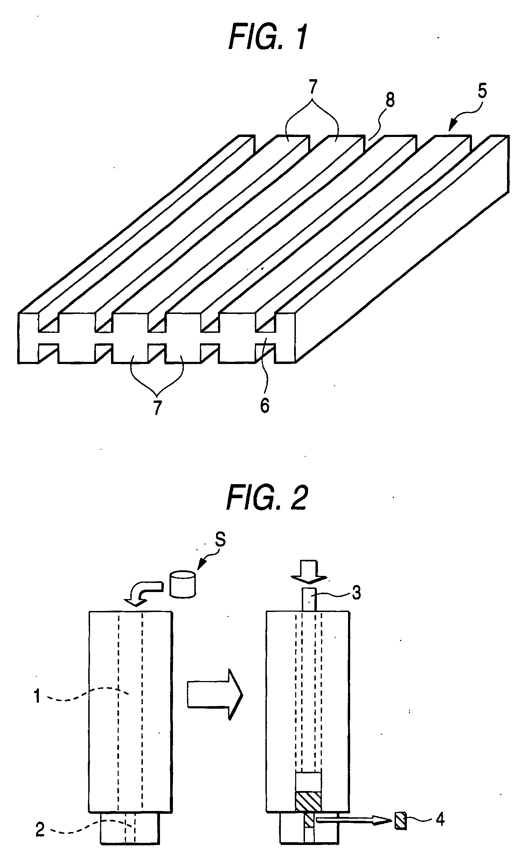

Fig. 1 is a perspective illustration showing an embodiment of a general fuel cell separator, and a plurality of partition walls 7 are provided in a protruding state at specific intervals on both sides of a flat plate portion 6. In order to fabricate a fuel cell, a number of fuel cell separators 5 are stacked along the protruding direction (the vertical direction in Fig. 1) of the partition walls 7. This stacking allows various fluids to flow through channels 8 formed by pairs of adjacent walls 7.

Usually, fuel is supplied to one side of the fuel cell separator 5, and a gaseous oxidizing agent etc. is supplied to the other side thereof. Accordingly, the fuel cell separator 5 is required to be excellent in gas impermeability (gas sealability) so that both are not mixed with each other. Further, the separator is required to be light in weight and low in cost, as well as to have high conductivity, because the unit cells are used in the stacked form. To such requirements, fuel cell separators obtained by molding compositions in which carbon powder is blended as a conductive filler with resins have hitherto been mainly used. In order to further improve conductivity, gas barrier properties and strength, a fuel cell separator has been proposed in which carbon fiber and carbon nanotubes are blended as a conductive filler with a thermoplastic resin (for example, see reference 1).

[Reference 1]

JP-A-2002-97375 (the term "JP-A" as used herein means an "unexamined published Japanese patent application")

SUMMARY OF THE INVENTION

However, the fuel cell separator in which carbon fiber and carbon nanotubes are blended with a thermoplastic resin has a disadvantage in fluidity of a conductive resin composition, a raw material for molding, because it contains the carbon fiber. Accordingly, there is a possibility of failure to obtain sufficient dimensional accuracy in molding. The fuel cell separators 5 are used in the stacked form as shown in Fig. 1, so that when the dimensional accuracy of the partition walls 7 is low, gaps are formed between the partition walls, which causes fluids to mix with each other.

The present invention has been made in view of such a situation, and an object thereof is to provide a conductive resin composition having good fluidity, excellent conductivity as a matter of course, and particularly suitable for the production of a fuel cell separator. Another object of the present invention is to provide a fuel cell separator having excellent conductivity, high dimensional accuracy and excellent gas sealability at low cost, using the above-mentioned conductive resin material.

In order to achieve the above-mentioned objects, the present inventors have conducted intensive investigation. As a result, the inventers have discovered that the concomitant use of graphite powder, fine carbon fiber having a fiber diameter of 1 to 500 nm and a hollow structure (and optionally carbon black) improves fluidity, as well as conductivity, to give a conductive resin composition applicable to injection molding and extrusion molding, thus completing the present invention.

That is to say, in order to achieve the above-mentioned objects, the present invention provides a conductive resin material, a fuel cell separator and a method for producing the fuel cell separator described below:

(1) A conductive resin composition comprising a resin component and a conductive filler, wherein said conductive filler comprises a graphite powder and a fine carbon fiber having a fiber diameter of 1 to 500 nm and a hollow structure.
(2) The conductive resin composition according to item 1, which further comprising carbon black.
(3) The conductive resin composition according to item 1, wherein the resin component is present in an amount of 20 to 50% by weight based on the total weight of the conductive resin composition, and the conductive filler is present in an amount of 50 to 80% by weight based on the total weight of the conductive resin composition.

(4) The conductive resin composition according to item 1, wherein the weight ratio of the graphite powder to the fine carbon fiber in the conductive filler is from 1:1 to 1:30.

(5) The conductive resin composition according to item 2, wherein the weight ratio of the graphite powder to the carbon black in the conductive filler is from 1:1 to 4:1.

(6) The conductive resin composition according to item 2, wherein the weight ratio of the carbon black to the fine carbon fiber in the conductive filler is from 1:1 to 7:1.

(7) The conductive resin composition according to item 6, wherein the weight ratio of the graphite powder to the sum of the carbon black and the fine carbon fiber in the conductive filler is from 1:1 to 4:1.

(8) A fuel cell separator comprising a conductive resin composition according to item 1.

(9) A process for producing a fuel cell separator comprising the steps of: providing a conductive resin composition according to any one of item 1; molding the conductive resin composition by injection molding or extrusion molding.

In the following description, the fine carbon fiber having a fiber diameter of 1 to 500 nm and a hollow structure is briefly referred to as "hollow fine carbon fiber".

BRIEF DESCRIPTION OF THE DRAWINGS

Fig. 1 is a perspective illustration showing an embodiment of a fuel cell separator used in the present invention and prior art.

Fig. 2 is a schematic view showing a test apparatus used for the evaluation of fluidity in Examples and Comparative Examples.

DETAILED DESCRIPTION OF THE INVENTION

Conductive Resin Composition

A conductive resin composition of the present invention contains a resin component and a conductive filler, and it is an important requirement to use (1) a combination of a graphite powder and a hollow fine carbon fiber, or (2) a combination of a graphite powder, a carbon black and a hollow fine carbon fiber as the conductive filler. As shown in EXAMPLE described later, when a graphite powder, a carbon black and a hollow fine carbon fiber are each independently used, the conductive resin material having high fluidity and high conductivity intended in the present invention cannot be obtained. On the other hand, the conductive resin composition excellent in conductivity and fluidity is obtained by blending the combination of the conductive fillers according to the present invention, and when the composition is formed, for example, into a fuel cell separator, the fuel cell separator having high conductivity, high dimensional accuracy, excellent sealability and high strength is obtained.

Although there is no particular limitation on the kind of resin used in the present invention, examples of thermosetting resins include a phenol resin, an epoxy resin, a polyimide resin, a furan resin and a diallyl phthalate resin. They can be used alone or as a mixture of two or more thereof. Further, examples of thermoplastic resins include polypropylene, polymethylpentene, a polycarbonate, ABS, polyethylene terephthalate, polybutylene terephthalate, a polyamide and a liquid crystal polyester. They can be used alone or as a mixture of two or more thereof.

As a graphite powder used in the present invention, there may be used natural graphite such as flake graphite, artificial graphite or granular graphite. In general, expanded graphite obtained by treating flake graphite with concentrated sulfuric acid and heating the treated graphite is preferably used.

Preferred examples of carbon blacks used in the present invention include Ketjen black, acetylene black, thermal carbon black and furnace carbon black, and they are preferably used alone or as a combination of two or more thereof. Ketjen black and acetylene black are developed as high-conductive fillers, and obtained by imperfect combustion of natural gas and thermal decomposition of acetylene gas, respectively. Thermal carbon black is a carbon having a large particle size obtained by thermal decomposition of natural gas, and examples thereof include FT carbon and MT carbon. Furnace carbon black is a filler obtained by imperfect combustion of hydrocarbon oil or natural gas, and classified into SAF, ISAF, IISAF, HAF, FF, FEF, MAF, GPF, SRF and CF, depending on the particle size. Among these various carbon blacks, Ketjen black, acetylene black or furnace carbon black large in specific surface area or high in DBP oil absorption is more preferred.

The hollow fine carbon fiber includes a so-called carbon nanotube. The carbon nanotube is a material discovered in the production process of C 60 fullerene molecules, having a single layer structure in which a carbon hexagonal mesh face is cylindrically closed, or a multiple layer structure, and having a hollow structure, a diameter of 1 to 100 nm and a length of 1 to 10 μm. There is no limitation on the kind of nanotube, and both the nanotube having the single layer structure and one having the multiple layer structure can be used. Further, as methods for synthesizing the carbon nanotube, there are various processes such as an arc discharge process, a laser abrasion process, a hydrocarbon catalyst decomposition process and a CVD process.

Further, the follow fine carbon fiber also includes carbon nanofiber, as well as the carbon nanotube. The carbon nanofiber is hollow carbon fiber having a fiber diameter of 100 to 500 nm and a fiber length of 10 to 500 μm. The carbon nanofiber can be synthesized by a vapor phase process. For example, a mixed gas of hydrogen and hydrocarbon is introduced into a reaction tube in an electric furnace kept at 1100°C to produce vapor-phase-grown hydrocarbon by the catalytic effect of an ultrafine particle metal, and the resulting vapor-phase-grown hydrocarbon is heat treated at 2,500°C, thereby obtaining the carbon nanofiber. Such carbon nanofiber is also disclosed in JP-A-2002-235279 and JP-A-2003-20527.

The graphite powder, the carbon black and the hollow fine carbon fiber are different from one another in size. Relatively, the graphite powder is large in particle size, the carbon black is intermediate in particle size, and the hollow fine carbon fiber is small in fiber diameter. Accordingly, when these are used together to prepare the conductive resin composition, the hollow fine carbon fiber enters gaps between particles of the graphite powder and between particles of the carbon black, and the carbon black and the hollow fine carbon fiber enter gaps between particles of the graphite powder, thereby each forming good conductive paths. Above all, the concomitant use of three kinds of the graphite powder, the carbon black and the fine carbon fiber makes the conductive paths denser. In order to form such conductive paths, the graphite powder preferably has a primary particle size of 50 to 500 μm, and the carbon black preferably has a primary particle size of 0.1 to 20 μm. In a conventional conductive resin composition, a resin material enters between conductive filler particles, which make it difficult to form conductive paths between the conductive filler particles. However, in the conductive resin composition of the present invention, conductive paths as described above are ensured, and high conductivity is obtained.

Further, in order to more securely ensure the above-mentioned conductive paths, when the graphite powder and the hollow fine carbon fiber are used together, the weight ratio of the graphite powder to the carbon fiber is preferably from 1:1 to 1:30. Similarly, when three kinds of the graphite powder, the carbon black and the hollow fine carbon fiber are used together, the weight ratio of the graphite powder to the carbon black is preferably from 1:1 to 4:1, and particularly preferably from 3:2 to 7:2. Further, the weight ratio of the carbon black to the hollow fine carbon fiber is preferably from 1:1 to 7:1, and particularly preferably from 2:1 to 5:1. Further, the weight ratio of the graphite powder to the sum of the carbon black and the hollow fine carbon fiber is preferably from 1:1 to 4:1.

In order to more securely ensure the above-mentioned conductive paths, the compounding amount of the conductive filler is preferably from 50 to 80% by weight in total based on the total weight of the conductive resin composition in any of the above-mentioned combinations. By adjusting it to 50% or more by weight, lower resistivity (higher conductivity) can be ensured, when the composition is formed into the fuel cell separator. In order to further pursue conductivity, it is preferred that the compounding amount of the conductive filler is preferably within the range of 70 to 80% by weight based on the total weight of the conductive resin composition.

In order to more securely ensure the above-mentioned conductive paths, corresponding to the above-mentioned compounding amount of the conductive filler, the compounding amount of the resin component is adjusted to 20 to 50% by weight based on the total weight of the conductive resin composition. The compounding amount within this range further enhances fluidity of the conductive resin composition, and improves moldability, shape-retaining properties of a molded product and releasability of a molded product from a mold. When the conductive resin composition is formed into the fuel cell separator, gas sealability is further enhanced coming from its high dimensional accuracy.

Various fillers that have hitherto been blended with conductive resin compositions may be blended within the range in which no adverse effect is exerted on moldability and conductivity, when costly allowed.

The conductive resin composition can be prepared by various well-known molding methods. In general, the resin is heat-melted and kneaded, and the conductive filler is added thereto in a specific amount in a predetermined combination. Then, the resulting mixture is kneaded by use of a kneading means such as a kneader or a Banbury mixer to prepare the conductive resin composition. In this preparation, a melt mixing process is generally used, and performs mixing with fluidity of the resin enhanced. Accordingly, the conductive filler can be easily uniformly mixed with the resin. As a result, the stability of the resulting conductive resin composition is enhanced. In the present application, the kneading temperature is from 200 to 300 °C, and the kneading time is 5 to 15 minutes.

In the present invention, electric resistance of the conductive resin composition can be appropriately set according to its use. In general, when the composition is formed into the fuel cell separator, the electric resistance is preferably 50 mΩ·cm or less, and more preferably 10 mΩ·cm or less. Electric resistance of the conductive resin can be controlled by regulating compounding amount and compounding ratio of the conductive fillers.

Further, for molding the conductive resin composition of the present invention, various molding processes are available, and can be appropriately selected according to the molded product. For example, there can be applied compression molding, injection molding, extrusion molding, transfer molding, blow molding and injection compression molding. The conductive resin composition of the present invention has high fluidity as described above, so that injection molding and extrusion molding are possible. Accordingly, the molded product can be obtained efficiently, and this is advantageous in production cost. The fluidity measured by the measuring method shown in Fig. 2 is preferably 30 % or more. Molding conditions in each molding process can be appropriately set depending on the composition and physical properties of the conductive resin composition.

Fuel Cell Separator

The fuel cell separator of the present invention is obtained by molding the above-mentioned conductive resin composition of the present invention. There is no limitation on the shape and structure thereof. For example, the shape shown in Fig. 1 can be taken. Further, as for the molding process, although compression molding which has hitherto been used is of course available, injection molding or extrusion molding is employed in terms of cost. As described above, the conductive resin composition of the present invention has high fluidity, so that injection molding and extrusion molding are sufficiently possible. There is no limitation on the molding conditions, which can be appropriately set depending on the composition and physical properties of the conductive resin composition.

EXAMPLES

The present invention will be illustrated in greater detail with reference to the following examples and comparative examples, but the present invention should not be construed as being limited thereby.
The following conductive filler and thermoplastic resin were mixed at compounding ratios (wt. %) shown in Table 1 by a melt mixing process, and further kneaded to prepare kneaded products. Then, the kneaded products were molded into test pieces by a method shown below. Further, the evaluation of fluidity was made using the kneaded products, and electric resistance was measured for the test pieces.

Conductive Filler

Graphite powder

(expanded graphite: thermal expanded graphite, manufactured by NIPPON GRAPHITE INDUSTRIES LTD., particle size; about 400 to about 800 μm)

Carbon black

(acetylene black: Denkabluck, manufactured by DENKI KAGAKU KOGYO KABUSHIKI KAISHA, particle size; about 5 to about 10 μm)

Hollow fine carbon fiber

(VGCF, manufactured by SHOWA DENKO K.K., fiber diameter: about 100 nm, fiber length: 10 to 400 μm)
The particle diameters of the graphite powder and carbon black described above stand for the diameter of the primary particle diameter.

Thermoplastic Resin

Polymethylpentene

(RT-18, manufactured by Mitsui Chemicals, Inc.)

Production Process

The thermoplastic resin was melted by heating, then the expanded graphite, the carbon black and hollow fine carbon fiber were added thereto and kneaded with the thermoplastic resin in this order to obtain the conductive resin composition. A mold coated with a releasing agent was filled with the kneaded product, and compression molding was conducted at 240 °C at a pressure of 100 MPa. Thus, the kneaded product was molded into a sheet of 100 mm X 100 mm X 0.7 mm to obtain the test piece.

Fluidity

The measurement of fluidity was made in accordance with JIS K7210, a flow test method of a thermoplastic resin. That is to say, as shown in Fig. 2, a test apparatus comprising a hole 1 having an internal diameter of 10 mm and a hole 2 having an internal diameter of 1 mm disposed at the lower part thereof in such a manner that they were communicated with each other was heated at 300°C, and a preformed product S (weight A) having an outer diameter of 8 mm which was formed of the above-mentioned kneaded product was put in the hole 1. Then, the preformed product was pushed into the hole 1 with a pressing member 3 at a constant load (10 MPa), and maintained for 4 hours. Thereafter, a sample 4 which flowed out of the hole 2 was cut out, the weight B thereof was measured, and fluidity was determined by the following equation. The results thereof are shown in Table 1.

Fluidity - (weight B of sample 4)/

(weight A of preformed product S) X 100 (%)

Resistance

Resistance was determined in accordance with JIS K7194, a resistivity test method by a four-probe method of a conductive plastic resin. That is to say, using a 4-probe conductivity meter, Loresta CP (manufactured by MITSUBISHI CHEMICAL CORPORATION), surface resistance value was measured, and the value was multiplied by the thickness of the sample (0.7 mm) and the fudge factor according to JIS K7194 to give volume resistivity. The results thereof are shown in Table 1.

Table 1

| | Example 1 | Example 2 | Example 3 | Example 4 | Example 5 | Example 6 | Example 7 |
|---|---|---|---|---|---|---|---|
| Polymethylpentene | 40 | 40 | 40 | 20 | 30 | 50 | 40 |
| Graphite Powder | 38 | 38 | 38 | 50 | 44 | 32 | 20 |
| Carbon Black | 10 | 20 | 7 | 14 | 12 | 8 | 18 |
| Hollow Fine Carbon Fiber | 12 | 2 | 15 | 16 | 14 | 10 | 22 |
| Fluidity (%) | 50 | 30 | 45 | 15 | 30 | 70 | 45 |
| Resistance (mΩ·cm) | 10 | 15 | 11 | 7 | 8 | 40 | 25 |

| | Example 8 | Example 9 | Example 10 | Example 11 | Comparative Example 1 | Comparative Example 2 | Comparative Example 3 |
|---|---|---|---|---|---|---|---|
| Polymethylpentene | 40 | 40 | 40 | 40 | 40 | 40 | 40 |
| Graphite Powder | 30 | 40 | 50 | 40 | 60 | - | - |
| Carbon Black | 14 | 9 | 4.5 | - | - | 60 | - |
| Hollow Fine Carbon Fiber | 16 | 11 | 5.5 | 20 | - | - | 60 |
| Fluidity (%) | 40 | 40 | 20 | 30 | 10 | 20 | 5 |
| Resistance (mΩ·cm) | 13 | 11 | 20 | 15 | 60 | 200 | - |

Note 1) The compounding amounts are on a percentage by weight basis.

2) In Comparative Example 3, the conductive filler could not be sufficiently kneaded with the resin, then Resistance of Comparative Example 3 could not be measured.

As shown in Table 1, it is revealed that the kneaded products or the test pieces of the respective Examples in which the graphite powder, the carbon black and the hollow fine carbon fiber are blended with the thermoplastic resin in combination according to the present invention are high in fluidity and have high conductivity, compared to the case where the graphite powder, the carbon black or the hollow fine carbon fiber is blended alone, or the case where the graphite powder and the carbon black are blended in combination, as shown in Comparative Examples 1 to 4.

Further, as shown in Example 4, it is revealed that a resin amount of 20% by weight or more ensures necessary fluidity. Still further, as shown in Examples 2 to 4 or 9 to 11, it is revealed that the resistance becomes lower with an approach to the optimization of the compounding ratios of the carbon black to the hollow fine carbon fiber and the compounding ratio of the expanded graphite to the other conductive filler.

Further, when the kneaded products of the respective Examples were injection molded, they could be easily molded into sheets of 100 mm X 100 mm X 2 mm. This shows that the fuel cell separators can be provided at low cost. Furthermore, the kneaded products were injection molded, setting the sheets to a thickness as thin as 1.5 mm. As a result, the kneaded products of the respective Examples could be molded, but the kneaded products of Comparative Examples 1 to 3 suffered the defect that they could not be molded because of their low fluidity.

As described above, according to the present invention, there is provided the conductive resin composition having high conductivity and high fluidity at the same time, and excellent in moldability. Further, the use of this conductive resin composition of the present application allows to provide the high-strength fuel cell separator having high conductivity and excellent in gas sealability at low cost.

While the present invention has been described in detail and with reference to specific embodiments thereof, it will be apparent to one skilled in the art that various changes and modifications can be made therein without departing the spirit and scope thereof.

The present application is based on Japanese Patent Application No. 2003-073660 filed on March 18, 2003, and the contents thereof are incorporated herein by reference.

## Claims

1. A conductive resin composition comprising a resin component and a conductive filler,
    wherein said conductive filler comprises a graphite powder and a fine carbon fiber having a fiber diameter of 1 to 500 nm and a hollow structure.

2. The conductive resin composition according to claim 1, which further comprising carbon black.

3. The conductive resin composition according to claim 1,
    wherein the resin component is present in an amount of 20 to 50% by weight based on the total weight of the conductive resin composition, and the conductive filler is present in an amount of 50 to 80% by weight based on the total weight of the conductive resin composition.

4. The conductive resin composition according to claim 1,
    wherein the weight ratio of the graphite powder to the fine carbon fiber in the conductive filler is from 1:1 to 1:30.

5. The conductive resin composition according to claim 2,
    wherein the weight ratio of the graphite powder to the carbon black in the conductive filler is from 1:1 to 4:1.

6. The conductive resin composition according to claim 2,
    wherein the weight ratio of the carbon black to the fine carbon fiber in the conductive filler is from 1:1 to 7:1.

7. The conductive resin composition according to claim 6,
    wherein the weight ratio of the graphite powder to the sum of the carbon black and the fine carbon fiber in the conductive filler is from 1:1 to 4:1.

8. A fuel cell separator comprising a conductive resin composition according to claim 1.

9. A process for producing a fuel cell separator comprising the steps of:

    providing a conductive resin composition according to claim 1;
    molding the conductive resin composition by injection molding or extrusion molding.

## FIG. 1

## FIG. 2

**European Patent Office**

**EUROPEAN SEARCH REPORT**

Application Number

EP 04 00 6396

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/065567 A (HASE NOBUHIRO ; NIIKURA JUNJI (JP); OHARA HIDEO (JP); HATOH KAZUHITO ()) 22 August 2002 (2002-08-22) <br> * abstract; claims 1-18 * <br> * page 4, paragraph 30 * <br> * page 6, paragraph 50 * <br> * page 10, paragraph 75; example 2 * <br> ----- | 1-9 | H01M8/02 <br> C08K3/04 <br> C08K7/22 <br> C04B35/00 |
| X | WO 03/014209 A (KOBAYASHI TOMOAKI ; IINO TADASHI (JP); SHOWA DENKO KK (JP); NOGUCHI MA) 20 February 2003 (2003-02-20) <br> * abstract; claims 1-20 * <br> ----- | 1-3,8,9 | |
| X | EP 1 061 597 A (KAWASAKI STEEL CO) 20 December 2000 (2000-12-20) <br> * abstract; claims 1-19 * <br> * page 5, lines 9-36 * <br> ----- | 1,2,4,8,9 | |
| P,X | WO 03/036661 A (CTS CORP) 1 May 2003 (2003-05-01) <br> * abstract; claims 1-26 * <br> * page 8, line 20 - page 10, line 19 * <br> * page 15; example 11 * <br> ----- | 1-7,9 | TECHNICAL FIELDS SEARCHED (Int.Cl.7) <br><br> H01M <br> C08K <br> C04B |

The present search report has been drawn up for all claims

| Place of search | Date of completion of the search | Examiner |
|---|---|---|
| The Hague | 18 June 2004 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 00 6396

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2004

| Patent document cited in search report | | Publication date | Patent family member(s) | | Publication date |
|---|---|---|---|---|---|
| WO 02065567 | A | 22-08-2002 | CN | 1457523 T | 19-11-2003 |
| | | | EP | 1351329 A1 | 08-10-2003 |
| | | | WO | 02065567 A1 | 22-08-2002 |
| WO 03014209 | A | 20-02-2003 | CN | 1464892 T | 31-12-2003 |
| | | | EP | 1414894 A1 | 06-05-2004 |
| | | | WO | 03014209 A1 | 20-02-2003 |
| | | | JP | 2003176327 A | 24-06-2003 |
| | | | US | 2003191228 A1 | 09-10-2003 |
| EP 1061597 | A | 20-12-2000 | CA | 2311196 A1 | 14-12-2000 |
| | | | EP | 1061597 A2 | 20-12-2000 |
| | | | JP | 2001236966 A | 31-08-2001 |
| | | | US | 6544680 B1 | 08-04-2003 |
| WO 03036661 | A | 01-05-2003 | US | 2003100653 A1 | 29-05-2003 |
| | | | WO | 03036661 A2 | 01-05-2003 |
| | | | US | 2003146418 A1 | 07-08-2003 |

EPO FORM P0459